# EUROPEAN PATENT SPECIFICATION

(11) **EP 4 538 027 B1**
(45) Date of publication and mention of the grant of the patent: **22.07.2026**
(21) Application number: 24203190.4
(22) Date of filing: 27.09.2024
(51) Int. Cl.: B29C 70/86, B29C 35/02, B29C 35/12, B29C 70/88

(54) **SYSTEM AND METHOD FOR FORMING A COMPONENT**
SYSTEM UND VERFAHREN ZUR HERSTELLUNG EINER KOMPONENTE
SYSTÈME ET PROCÉDÉ DE FORMATION D'UN COMPOSANT

(30) Priority: 12.10.2023 US 202363589684 P; 16.01.2024 US 202418413303
(43) Date of publication of application: 16.04.2025
(73) Proprietor: The Boeing Company, Arlington, VA 22202 (US)
(72) Inventor: LI, Richard, Arlington, 22202 (US); WEN, Ed, Arlington, 22202 (US); CHAMBERS, Jeffrey, Arlington, 22202 (US); THOMAS, Holly, Arlington, 22202 (US); BAILEY, Michael Jason, Arlington, 22202 (US)
(74) Representative: Sandri, Sandro

(56) References cited:
- EP-A1- 4 289 589
- CN-B- 107 662 303
- US-A1- 2022 032 563

## Description

### FIELD OF THE DISCLOSURE

The present disclosure generally relates to a system and a method for forming, such as via integral curing, a component, such as a composite laminate part.

### BACKGROUND

Composite materials have been used as structural elements in various applications. Composite materials, such as fiber-reinforced polymers, have a relatively high strength to weight ratio. The high strength to weight ratio makes these materials desirable for vehicle construction, such as aircraft. These materials typically include many layers or plies of a reinforcement material bound within a matrix material to form a heterogenous material with combined properties that are different from the reinforcement material and matrix materials individually.

For some applications, it is desirable for the composite material to provide multiple functions. For example, it may be desirable to have a single laminate structure that provides both structural support and conducts current for powering an electrical load, communication transmission, and/or the like. Power distribution to embedded conductive materials within a laminated composite structure requires a means of delivering electric current to a known location in the thickness and specific region of the laminated structure.

Some existing systems embed one or more insulated wires through the thickness of the laminate structure. The assembly of the laminate may include forming cut-outs or splices through multiple plies, and feeding the wire through the cut-outs as the plies are sequentially applied on a mandrel or other tool to form a laminate stack up. This process of embedding wires into the structure at multiple locations during the structure formation can be detrimental to structural properties of the laminate structure and can inhibit proper interfaces between structural plies of the laminate structure and adjacent components, such as a cellular core. For example, routing wires through the surface of the laminate structure at multiple locations may result in discontinuities, such as bumps and stress concentrations, within the laminate structure. The discontinuities may degrade the structural properties of the laminate, requiring additional plies (and therefore weight) to satisfy material strength requirements. Furthermore, the insulation material of the wires may contaminate the matrix material (e.g., resin) of the laminate structure, degrading the material properties. Wire stripping and other wire preparation and routing tasks may increase the risk of foreign object debris (FOD) contaminating the laminate structure. The embedded wires also may introduce a failure risk attributable to handling of the wires and interference between the wires and adjacent components. During the life of the system, the embedded wires may experience fatigue and wear over time which could cause the wires to fail.

During a forming process such as a composite fabrication process, various types of components are cured. Typically, aerospace composite parts are cured via convective heating processes that are long, slow, and expensive. These processes, often performed in a heating chamber of an autoclave or oven, involve heating up the air and/or gas volume, which then transfers heat to a large tool, and in turn transfers heat to the part. In tooling where closed-mold systems are not employed, the air/gas volume also transfer heat to the part through several layers of bagging materials on a side opposite the tool. Such a process typically inefficiently delivers energy to the part. In particular, the amount of energy imparted onto the part for curing is typically only a fraction of the combined energy of heating the mass of air, tooling, and bagging materials. Additionally, the large thermal mass of the system results in imprecise control of part temperature rise, dwell, and fall, thereby posing challenges in relation to tailoring temperatures to discrete regions of composite parts (for example, thicker regions, and pad-ups that heat slower generally limit process speeds and may have nonuniformity in curing). Also, part sizes are constrained by a size of the heating chamber. As such, production rates are typically limited by a footprint of these chambers, as well as the loading and unloading times.

Document US 2022/032563 A1, with its abstract, describes a method of curing of thermoset resin. The method includes disposing one or more thermoset resin layers in a layup; disposing one or more heaters in the layup, wherein each of the one or more heaters includes two electrodes, wherein the two electrodes of each of the one or more heaters are couplable to an external electricity source when the one or more heaters are disposed in the layup; and providing enough electricity to the electrodes of each of the one or more heaters to cause the one or more heaters to heat the layup to fully cure the one or more thermoset resin layers to form a cured laminate.

### SUMMARY OF THE DISCLOSURE

A need exists for an improved system and method for forming, such as via curing, a component, such as a laminate composite part. Further, a need exists for an efficient and effective system for forming a composite part.

With those needs in mind, the present disclosure provides a system for forming a component having the features described at claim 1.

The dependent claims outline advantageous forms of embodiment of the system.

Furthermore, the present disclosure provides a method for forming a component having the steps defined at claim 9.

The dependent method claims define advantageous ways of carrying out the method.

### BRIEF DESCRIPTION OF THE DRAWINGS

These and other features, aspects, and advantages of the present disclosure will become better understood when the following detailed description is read with reference to the accompanying drawings in which like numerals represent like parts throughout the drawings, wherein:
Figure 1 illustrates a block diagram of a system for forming a component.
Figure 2 illustrates a flow chart of a method for forming a component.
Figure 3 illustrates a top view of a system for forming a component.
Figure 4 illustrates a side of the system of Figure 3.
Figure 5 illustrates a schematic diagram of a system for forming a component.
Figure 6 illustrates an isometric view of a component within a tool.
Figure 7 illustrates a perspective view of an aircraft.
Figure 8 illustrates an isometric lateral view of a nacelle of a propulsion system of the aircraft.
Figure 9 illustrates a front view of an inlet cowl of the nacelle shown in Figure 8.
Figure 10 shows a portion of the inlet cowl indicated by a dashed circle in Figure 9.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

Examples of the present disclosure provide a system and method for efficiently and effectively forming (such as fabricating, curing, hearing, and/or the like) a component, such as a laminate composite part. The component is formed through heating in order to join, fabricate, consolidate, cure, and/or the like various portions together. In at least one example, embedded heaters within the component are used to cure the component, thereby resulting in direct conductive heat transfer from the heaters to a matrix (for example, a polymer resin). Using the embedded heaters, which are an integral portion of the component, reduces the amount of heat transfer to the surrounding tooling, air/gas volume, and part itself, thereby greatly increasing efficiency and rate while reducing wasted energy. Consequently, the lower thermal mass of the system and conductive heat transfer allows for fast and tighter control of the temperature of the component, which is desirable for optimizing cure cycles, reducing change of overshoots, and uncontrolled exothermic events. In short, examples of the present disclosure enable faster curing, and higher composite part quality. Examples of the present disclosure can also be used with materials other than composites.

Further, examples of the present disclosure are used to form a multifunctional structure, in which the embedded heaters can also serve as a lightweight heater for the component, such as an ice protection system for a portion of an aircraft. For example, the heater(s) of the ice protection system are used to cure the ice protection system during a forming process. Such methods eliminate, minimize, or otherwise reduce a need for any other large heating chambers (for example, ovens or autoclaves), which reduces manufacturing, labor, and processing times and costs.

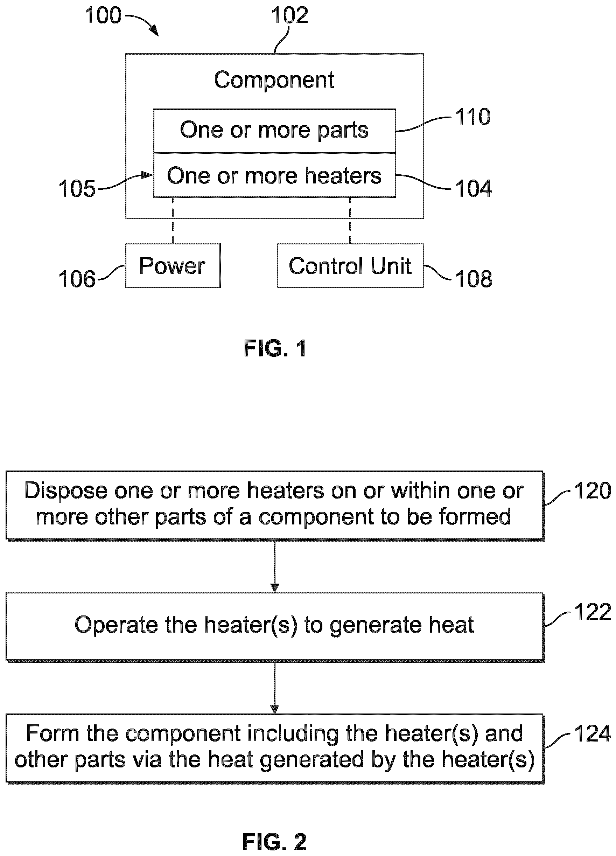

Figure 1 illustrates a block diagram of a system 100 for forming a component 102. The system 100 includes one or more heaters 104 of the component 102. The heater(s) 104 are in communication with a source of power 106, such as through one or more wired connections (for example, one or more leads, bus bars, and/or the or the like). The heater(s) 104 are also in communication with a control unit 108, such as through one or more wired or wireless connections. In at least one example, the power 106 is wired to the control unit 108, which can provide power to the heater(s) 104.

In at least one example, the component 102 includes one or more parts 110, such as composite layers, such as one or more carbon layers (for example, a carbon veil having one or carbon fibers, carbon nanotubes, and/or the like), one or more dielectric layers (such as including fiberglass prepreg and adhesives) one or more film layers, one or more adhesive layers, and/or the like. The component 102 also includes the heater(s) 104. The component 102 can also include wires for connections to the heater(s) 104. That is, the component 102, upon formation (such as via, for example, heating, curing, and/or fabricating), includes the heater(s) 104, which are used during a lifetime of the component 102. For example, the component 102 upon formation can be a laminated composite structure that includes the heater(s) 104, which are used during the lifetime of the formed component 102. The heater(s) 104 are not removed from the component 102. Instead, the heater(s) 104 are an integral and functional portion of the component 102. The heater(s) 104 can be electrically resistive heaters. The heaters(s) 104 can be electrically-powered resistive layers that are integrated into the component 102 (such as composite laminate) and configured for other desired functionality after the component 102 is formed. For example, the heater(s) 104 can be used with respect to an ice protection system for a nacelle of a propulsion system of an aircraft. In this manner, the heater(s) 104 are used for different purposes, such as to form the component 102, and for functional heating after the component 102 is formed and complete.

In at least one example, the component 102 includes a single heater 104. As another example, the component 102 includes two more heaters 104. In at least one example, the heater(s) 104 form one or more heater layers 105 of the component 102. The heater layer 105 is an electrical layer configured to generate heat. In at least one example, the heater layer 105 is a carbon veil, which includes randomly oriented carbon fibers. As another example, the heater layer 105 includes carbon nanotubes. The heater layer 105 can be any type of continuously conductive material configured to provide an electrically resistive heater. For example, electrical current generated by the source of power 106 flows into the heater layer 105, thereby increasing the temperature of the heater layer 105.

In operation, in order to form (such as via curing) the component 102, the control unit 108 operates the heater(s) 104 (of the component 102 to be formed) to heat the one or more parts 110 and the heater(s) 104 to join, consolidate, fabricate, cure, and/or the like the one or more parts 110 and the one or more heaters 104 together. The control unit 108 operates to control the heater(s) 104 to heat one or more portions of the component 102 to desired temperatures. As such, the component 102 is formed via internal heating, generated by the one or more heaters 104, instead of being disposed within a heating chamber of an oven, autoclave or the like. The component 102 is formed via heat generated from the heater(s) 104 from an inside of the component 102 (in contrast to external heat within an internal chamber of an oven, autoclave, or the like). The component 102 is formed through heat generated by the heater(s) 104, which, themselves become an integral part of the component 102. After the heater(s) 104 are operated to form the component 102, the heater(s) 104 are an integral part of the component 102, as formed. The heater(s) 104 are used during a lifetime of the component 102. For example, the heater(s) 104 can be part of an ice protection system of a nacelle of a propulsion system of an aircraft. Additionally, the heater(s) 104 can be used during a maintenance operation of the component 102 to reform the component 102. For example, if a part 110, such as a composite layer, is replaced, the heater(s) 104 can be operated to generate heat to reform the component 102 with a replacement part 110, instead of using an oven or autoclave to reform the component 102.

The system 100 including the heater(s) 104 of the component 102 efficiently forms (such as by heating to join, consolidate, fabricate, cure, and/or the like various portions together) the component 102 by using integral, embedded heater(s) 104. For example, the heater(s) 104 cure composite laminate parts and the heater(s) 104 together, thereby resulting in direct conductive heat transfer from the heater(s) 104 to a matrix (for example, polymer resin) of the component 102. By using the heater(s) 104 to internally heat the component 102 during a forming process, an amount of heat transfer to surrounding tooling, air and the component 102 itself is reduced (as compared to using an oven or autoclave). As such, a lower thermal mass of the system 100 and conductive heat transfer allows for faster and tighter control of the temperature of the component 102, which is desirable for optimizing cure cycles, reducing chance of overshoots, exotherms, and the like.

As described herein, the system 100 for forming the component 102 includes the heater(s) 104, which are configured to generate heat to form the component 102. Upon formation, the component 102 includes the heater(s) 104. The component 102 also includes the part(s,) 110. The heater(s) 104 are configured to generate the heat to join, consolidate, fabricate, or cure the part(s) 110 and the heater(s) 104 together to form the component 102.

Figure 2 illustrates a flow chart of a method for forming a component. Referring to Figures 1 and 2, at 120, one or more heaters 104 are disposed on or within one or more other parts of the component 102 to be formed. The other parts can include one or more adhesives, films, structural layers, bus bars, and/or the like. At 122, the control unit 108 operates the heater(s) 104 to generate heat at one or more desired temperatures or power input levels for one or more desired time periods. At 124, the component 102 including the heater(s) 104 and the other parts is formed via the heat generated by the heater(s) 104. The integral, embedded heater(s) 104 of the component 102 itself are used to form (such as by generated heat to join, consolidate, fabricate, cure, and/or the like) the component 102. After the component 102 is formed, the heater(s) 104 can be used to generate heat as a function of the component 102 (such as to prevent ice formation on a structure, heat a structure, and/or the like).

The systems and methods described herein use the heater(s) 104 (such as embedded electrical heaters) in a component 102 (such as composite laminate) during a forming process of the component 102. For example, the heater(s) 104 are used to cure or assist curing of the component 102. It has been found that the energy used to conductively cure a composite part using the integral, embedded heater(s) is an order of magnitude lower compared to an appropriately sized convective heating chamber such as an autoclave or oven. This is due to lower overall heated thermal mass and the heat flow direction from inside-out (from the embedded heater(s) 104 within the component 102), in contrast to outside-in (from the tooling or heated air/gas) in a convectively cured scenario.

It has been found the heater(s) 104 can rapidly heat up and closely track a prescribed temperature cure profile for composite laminates, even across laminates with zones of different laminate thicknesses, thereby resulting in cure time savings as part temperatures meet dwell temperature specifications sooner. Further, multiple heaters 104 can be used to generate heat in different zones of the component 102. The zones can correspond to regions having different thicknesses. As such, the control unit 108 can operate to tailor and control the heating for each zone independently such that temperature setpoints can be met quickly and efficiently even in complex parts.

Additionally the integral heater(s) 104 enable curing without the use of an oven or autoclave, and without expensive and pressure-rated tooling, thereby reducing equipment costs and loading times. Further, the integral heater(s) 104 allow for formation of large-scale, single piece composite parts that are not limited to chamber sizes (such as of ovens or autoclaves), which reduces structural design weight of a part as fasteners and structural interfaces can be reduced.

Additionally, thermally insulating tooling can be used to further increase efficiency by trapping heat provided by the heater(s) 104 from within the component 102. Also, the embedded heater(s) 104 can also assist with convective curing processes. For example, a component 102 with the embedded heater(s) 104 can be heated nominally in a heating chamber (such as of an oven or autoclave), while also having electrical power delivered to the embedded heaters 104, thereby resulting in heating from both within and outside of the component 102. The net effect is faster ramp-to-dwell temperatures, and improved temperature uniformity of the component 102. Also, the embedded heaters 104 can also assist with structural repair of the component 102, such as by providing internal heating that can be used to cure adhesives and patches of reinforcing materials around damaged areas.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 108 may be or include one or more processors that are configured to control operation, as described herein.

The control unit 108 is configured to execute a set of instructions that are stored in one or more data storage units or elements (such as one or more memories), in order to process data. For example, the control unit 108 may include or be coupled to one or more memories. The data storage units may also store data or other information as desired or needed. The data storage units may be in the form of an information source or a physical memory element within a processing machine.

The set of instructions may include various commands that instruct the control unit 108 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 108. It is to be understood that the processing or control units may represent circuits, circuitry, or portions thereof that may be implemented as hardware with associated instructions (for example, software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 108 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

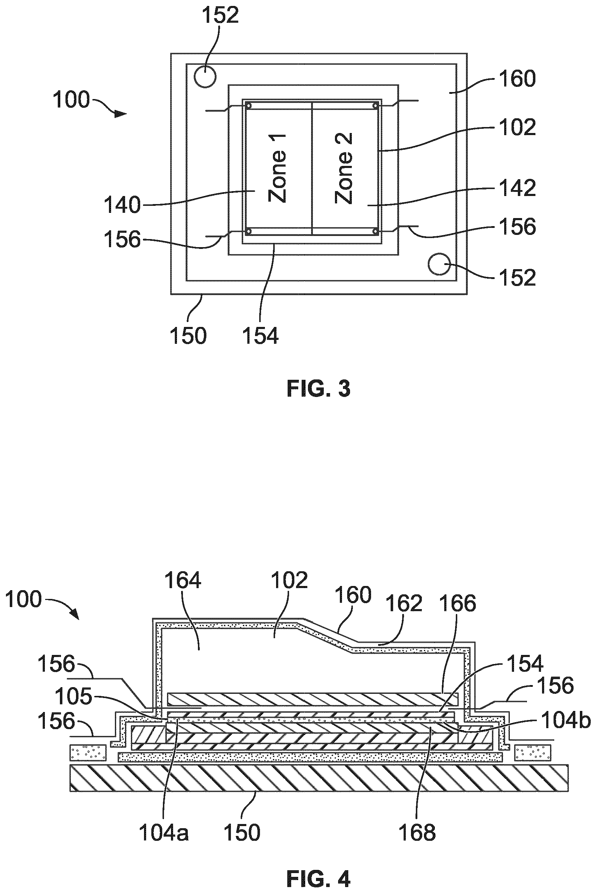

Figure 3 illustrates a top view of a system 100 for forming a component 102. Figure 4 illustrates a side of the system 100 of Figure 3. The component 102 can include different zones, which can be associated with different thicknesses, for example. For example, a first zone 140 is associated with a first thickness of the component 102, while a second zone 142 is associated with a second thickness of the component 102. The first thickness differs from the second thickness. A first heater 104a can be disposed within the first zone 140, while a second heater 104b can be disposed within the second zone 142. The first heater 104a and the second heater 104a are within a heater layer 105. Referring to Figures 1, 3, and 4, the control unit 108 operates the first heater 104a and the second heater 104b to heat the different zones 140 and 142 to different temperatures to form the component 102. Optionally, the thicknesses of the zones 140 and 142 can be the same. Also optionally, the component 102 may include additional zones configured to be heated to different temperatures.

The component 102 to be formed can be placed on a substrate 150, such as a tooling or mold. The substrate 150 can include vacuum ports 152. The component 102 can also include a busbar 154. Wires 156 can electrically couple the heaters 104a and 104b to the source of power 106. Bagging 160 and insulation 162 can be disposed over the component 102 during the forming process.

The component 102 to be formed includes various parts. For example, the component 102 includes a composite laminate layer 164, a fiberglass layer 166, the busbar(s) 154, the heaters 104a and 104b in the heater layer 105, and a fiberglass layer 168. The component 102 can include more or less parts than shown. As described, the heaters 104a and 104b that will become a part of the component 102 are used to generate heat to form the component 102, such as to cure the various parts together.

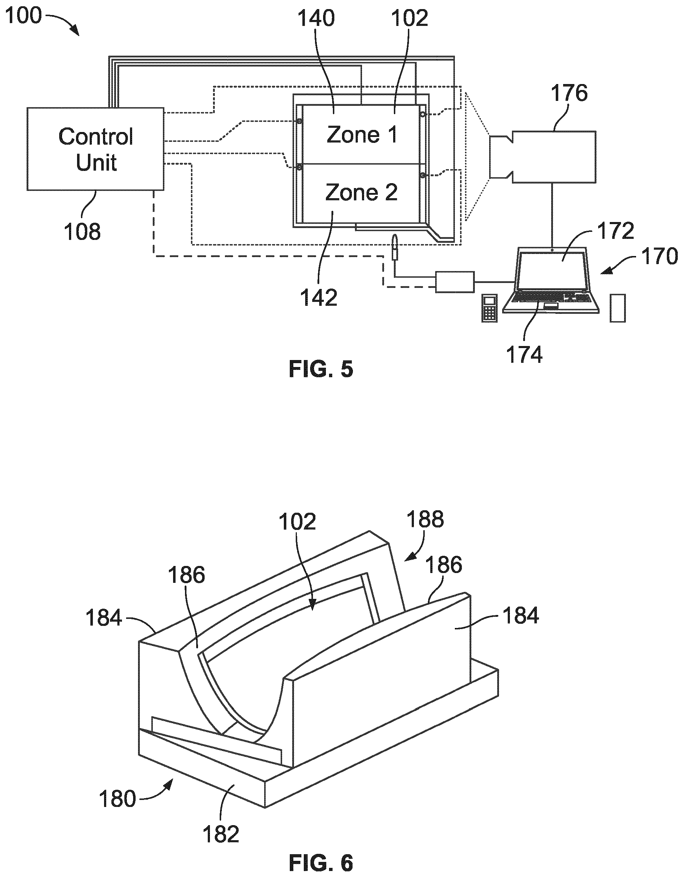

Figure 5 illustrates a schematic diagram of the system 100 for forming the component 102. Referring to Figures 1-5, as noted, the control unit 108 is used to control operation of the heaters 104a and 104b to generate heat in relation to the zones 140 and 142 to form the component 102. A user interface 170 can be used monitor and control operation. For example, the user interface 170 includes a display 172 (such as an electronic screen or monitor) and an input device 174 (such as keyboard, mouse, touchscreen interface, stylus, and/or the like). The user interface 170 is in communication with the control unit 108, such as through one or more wired or wireless connections. In at least one example, the user interface 170 includes the control unit 108.

The control unit 108 (and the user interface 170) can also be in communication with an imaging device 176, such as a thermal camera, an infrared camera, and/or the like. The imaging device 176 is configured to acquire images of the component 102 during the forming process. The imaging device 176 is in communication with the control unit 108, such as through one or more wired or wireless connections. The control unit 108 receives signals including the acquired images to monitor the temperatures of the component 102, such as the different zones 140 and 142, and adapt control of the heaters 104a and 104b accordingly. Optionally, the system 100 does not include the imaging device 176.

The control unit 108 can also be in communication with one or more thermometers that are configured to detect temperatures of the component 102 during the forming process. For example, different thermometers can be disposed on or proximate to the different zones 140 and 142. The control unit 108 receives signals from the thermometer(s) to monitor the temperatures of the component 102, such as the different zones 140 and 142, and adapt control of the heaters 104a and 104b accordingly. Optionally, the system 100 does not include the thermometers.

Figure 6 illustrates an isometric view of the component 102 within a tool 180. The tool 180 is an example of the substrate 150 shown in Figures 3 and 4. The tool 180 includes a base 182 and one or more upstanding walls 184 having arcuate internal surfaces 186 that are configured to cradle the component 102 to provide a desired shape during the forming process. The tool 180 can be shaped differently than shown in Figure 6. In at least one example, the tool 180 can be a flat mold. In at least one other example, a tool may not be used.

The arcuate internal surfaces 186 of the tool 180 define a curved receiving chamber 188 for the component 102 to be formed. The component 102 can include zones of different thickness, pad up regions, and/or the like. Referring to Figures 1-6, the control unit 108 can operate the heater(s) 104 to generate heat of varying temperatures, such as in relation to the different zones 140 and 142.

Referring to Figures 1-6, in a least one example, the heater(s) 104 provide a conductive heater layer network sandwiched between dielectrics on a composite structure, and electrically connected to a power source (via wires or other arrangements). The heaters(s) 104 generate heat from within the component 102 to increase the temperature of the component 102. Temperatures of the component 102 can be tracked (such as via the imaging device 176 in communication with the control unit 108), and subsequently controlled by the control unit 108, such as by varying electrical power input to the heater(s) 104. The heater(s) 104 and parts 110 can be placed at any depth within a laminate stacking.

The parts 110 can include a dielectric layer that electrically isolates the heater(s) 104 from composite laminate to restrict applied electrical power into the heater layer 105. Before the forming process, the composite materials can be in uncured, semicured, or pre-cured. The substrate 150, such as the tool 180, assists in holding a shape of the uncured stack of material, and thereby determines a resultant geometry of the component 102 during and after the forming process. Additionally, one or more caul plates can be stacked on top of the component prior to the forming process to control surface quality, and if thermally conductive, can help to spread heat more uniformly across the component 102, particularly between regions. Insulation can be used to trap heat generated from the heater(s) 104 and reduce heat transfer to mediums and materials external to the component 102 (for example, air, external tooling and fixturing).

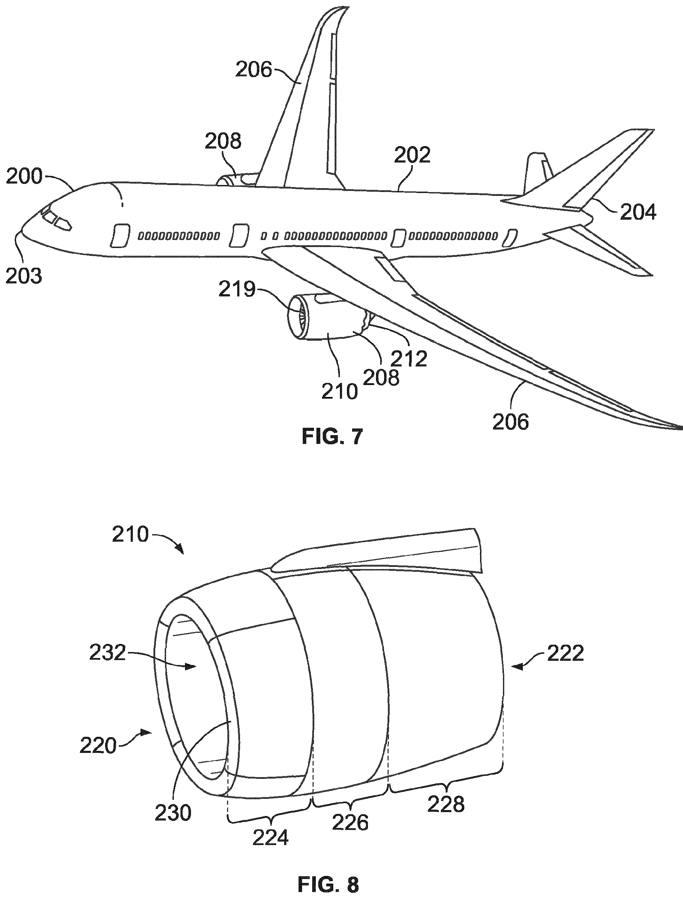

Figure 7 is a perspective illustration of an aircraft 200. The aircraft 200 can include one or more component 102, as described herein. For example, the component 102 can be an ice protection system installed on the aircraft 200. The aircraft 200 may include a fuselage 202 extending from a nose 203 to an empennage 204. The empennage 204 may include one or more tail surfaces for directional control of the aircraft 200. The aircraft 200 includes a pair of wings 206 extending from the fuselage 202. One or more propulsion systems 208 propel the aircraft 200. The propulsion systems 208 are supported by the wings 206 of the aircraft 200, but may be mounted to the fuselage or tail in other types of aircraft. Each propulsion system 208 includes a rotor assembly 219 with rotors that spin to direct air.

The rotor assembly 219 of each propulsion system 208 is surrounded by a nacelle 210. The nacelle 210 is an outer casing or housing that holds the rotor assembly 219. The nacelle 210 includes an inlet section, referred to as an inlet cowl, at a leading or front end of the nacelle 210. The nacelle 210 may also include a fan cowl, a thrust reverser section, and an aft fairing section located behind the inlet cowl along a longitudinal length of the nacelle 210. The inlet cowl has an inner barrel that defines an air inlet duct for directing air to the rotor assembly 219. The nacelle 210 may have an exhaust nozzle 212 (for example, a primary exhaust nozzle and a fan nozzle) at an aft end of the propulsion system 208. In an example, each propulsion system 208 may include or represent a gas turbine engine. The rotor assembly 219 may be a portion of the engine. The engine burns a fuel, such as gasoline, kerosene, biofuel, or other fuel source, to generate thrust for propelling the aircraft 200.

Figure 8 illustrates an embodiment of the nacelle 210 of one of the propulsion systems 208 of the aircraft 200 according to an example. The nacelle 210 extends a length from a front end 220 to an aft end 222 (opposite the front end 220). The nacelle 210 may include an inlet cowl 224, a fan cowl 226 disposed aft of the inlet cowl 224, and at least one aft section 228 disposed aft of the fan cowl 226. The inlet cowl 224 defines a leading edge 230 of the nacelle 210 at the front end 220 to direct air into a core 232 of the nacelle 210.

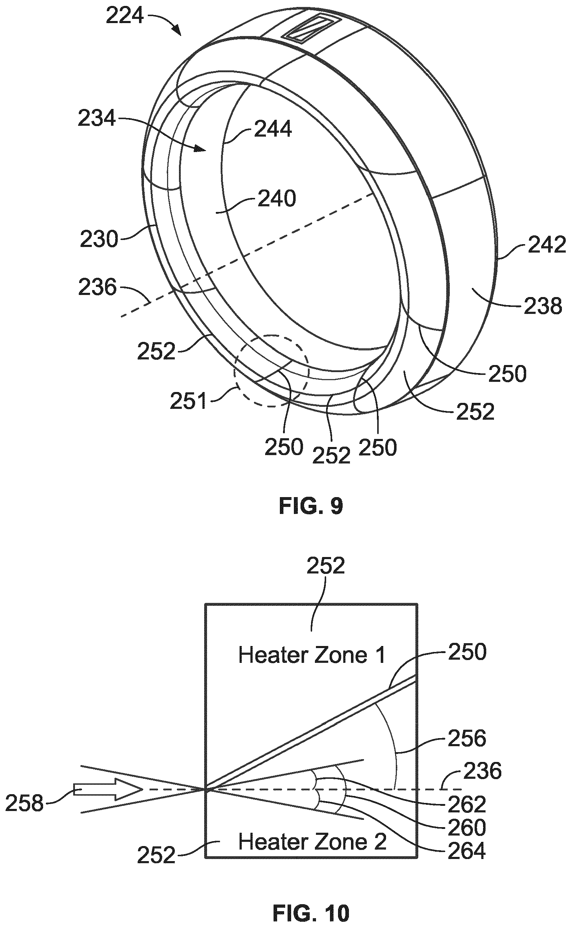

Figure 9 is a front view of the inlet cowl 224 shown in Figure 8. The inlet cowl 224 has an annular barrel shape that defines a central opening 234 that is fluidly connected to the core 232 (shown in Figure 6) of the nacelle 210. The term "annular barrel shape" means that the inlet cowl 224 defines a closed, ring-like shape when viewed from the front. The annular barrel shape is oriented about a central longitudinal axis 236 that extends through the central opening 234. The inlet cowl 224 may have a generally cylindrical shape. For example, the leading edge 230 may be circular. The inlet cowl 224 directs air through the central opening 234 into the core 232.

The inlet cowl 224 has the leading edge 230, an outer side 238 and an inner side 240. The outer side 238 extends from the leading edge 230 to an outer aft edge 242. The inner side 240 extends from the leading edge 230 to an inner aft edge 244. The outer side 238 is radially outside of the inner side 240 and surrounds the inner side 240. The inner side 240 may define the central opening 234 that operates as an intake duct to supply air into the core 232 for the rotor assembly 219. The inlet cowl 224 may define a cavity (not shown) that is aft of the leading edge 230 and radially disposed between the outer side 238 and the inner side 240.

In an example, after formation, the component 102 (shown and described with respect to Figures 1-6) is used to define the leading edge 230 of the inlet cowl 224. For example, the component 102 may be formed into the annular barrel shape. An ice protection system including the heater(s) 104 may define the skin of the inlet cowl 224 that is exposed to the ambient environment. Optionally, the component 102 is one panel of multiple different panels assembled side by side along the circumference of the inlet cowl 224. For example, a first component 102 (such as a first laminated structure) may be assembled adjacent to a second component 102 (such as a second laminated structure) that has the same or a similar composition, shape, and size as the first component 102. In another example, the component 102 may be a unitary, one-piece structure that forms the entire annular leading edge 230 without any seams. In this one-piece embodiment, the component 102 optionally may include multiple electrical loads within the thickness, and the electrical loads may be separated from one another at seams.

The component 102 may be, or otherwise form a portion of, an electric ice protection system (EIPS) that is used to meet engine ice accretion and ingestion requirements. The electrical loads may be heater elements (for example, electrically resistive plies). The heater elements convert electrical energy to thermal energy to warm the skin of the inlet cowl 224 along the leading edge 230. In an example, the component(s) 102 include multiple heater elements spaced apart from one another by seams. The heater elements are arranged along the circumference of the inlet cowl 224, such that each heater element defines a respective heater zone 252 that represents a circumferential section of the leading edge 230.

With continued reference to Figure 9, Figure 10 shows a portion of the inlet cowl 224 indicated by the dashed circle 251 in Figure 9. In an example, the seams 250 are not oriented parallel to the central longitudinal axis 236 and/or the streamwise direction of airflow through the central opening 234. For example, heater elements may be arranged such that the seams 250 defined between adjacent heater elements define an oblique angle 256 relative to the central longitudinal axis 236 and a streamwise direction of airflow 258 through the inlet cowl 224. The oblique angle 256 is not parallel or perpendicular. For example, the oblique angle 256 is between 1 and 89 degrees. In an example, the oblique angle 256 may be between 20 and 70 degrees. Optionally, the oblique angle 256 may be between 30 and 60 degrees. In an example, the seams 250 are oriented such that the seams 250 define an oblique angle relative to an entire range 260 of streamwise airflow directions that the aircraft 200 may experience in flight. For example, the range 260 may be defined between a maximum ascent angle 262 (while the aircraft is ascending) and a maximum descent angle 264 (while the aircraft is descending). The range 260 may be the maximum ascent angle 262 plus the maximum descent angle 264. As such, regardless of the angle of attack of the aircraft at a given time during typical flight conditions, the seams 250 are oriented oblique to the current streamwise direction of airflow 258.

In general, the seams 250 represent areas along the inlet cowl 224 that risk ice accumulation because the seams 250 may have a lower thermal flux than the adjacent heater zones 252. The ice accumulation can negatively affect aerodynamic properties of the aircraft 200 and may also potentially damage or increase wear on the rotor assembly 219. By orienting the heater elements such that the seams 250 between the heater zones 252 are oblique to the streamwise direction of airflow 258, the inlet cowl 224 avoids ice build-up. For example, the cold air moving in the airflow direction 258 only intersects the seams 250 at small areas before traversing the heater zones 252. Most cold air is heated along a first heater area 252, then traverses across a seam 250 before being heated along a second heater area 252.

As described herein, examples of the present disclosure provide an improved system and method for forming a component, such as a composite part. Further, examples of the present disclosure provide an efficient and effective system for forming a composite part.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. While the dimensions and types of materials described herein are intended to define the parameters of the various embodiments of the disclosure, the embodiments are by no means limiting and are example embodiments. Many other embodiments will be apparent to those of ordinary skill in the art upon reviewing the above description. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods.

## Claims

1. A system (100) for forming a component (102) of an ice protection system of an inlet cowl (224) of a nacelle (210) of an aircraft propulsion system, the system (100) comprising:
one or more composite layers and one or more dielectric layers forming one or more parts (110) of the component (102);
one or more heaters (104) configured to generate heat to form the component (102), wherein the component (102), upon formation, includes the one or more heaters (104);
wherein the one or more heaters (104) are configured to generate the heat to join, consolidate, fabricate, or cure the one or more parts (110) and the one or more heaters (104) together to form the component (102);
wherein the one or more heaters (104) comprise:
a first heater (104a) configured to heat a first zone (140) of the component (102); and
a second heater (104b) configured to heat a second zone (142) of the component (102);
wherein the first heater (104a) and the second heater (104b) are within a heater layer (105).

2. The system (100) of claim **1,** further comprising a control unit (108) in communication with the one or more heaters (104), wherein the control unit (108) is configured to control operation of the one or more heaters (104).

3. The system (100) of any one of the preceding claims, wherein the one or more heaters (104) are one or more electrically resistive heaters (104).

4. The system (100) of any one of the preceding claims, wherein the thickness of the first zone (140) is different from the thickness of the second zone (142).

5. The system of any one of claims 1-3, wherein the thickness of the first zone (140) is the same as the thickness of the second zone (142).

6. The system of claim 1, wherein the component (102) includes additional zones configured to be heated to different temperatures.

7. The system (100) of any one of the preceding claims, further comprising an imaging device (176) configured to acquire images of the component (102) as the component (102) is formed.

8. The system of any one of claims 1-7, wherein the one or more heaters (104) are configured to be used to form the component (102), and to functionally heat the component (102) after the component is formed.

9. A method for forming a component (102) of an ice protection system of an inlet cowl (224) of a nacelle (210) of an aircraft propulsion system, the method comprising:
disposing, on or within one or more parts of a component to be formed, one or more composite layers and one or more dielectric layers and one or more heaters (104) configured to generate heat;
generating, by the one or more heaters (104), the heat to join, consolidate, fabricate, or cure the one or more parts (110) and the one or more heaters (104) together to form the component (102),
wherein the component (102), upon formation, includes the one or more heaters (104);
a first heater (104a) being configured to heat a first zone (140) of the component (102); and
a second heater (104b) being configured to heat a second zone (142) of the component (102);
wherein the first heater (104a) and the second heater (104b) are within a heater layer (105).

10. The method of claim 9, comprising a control unit (108) in communication with the one or more heaters (104), wherein the control unit (108) controls operation of the one or more heaters (104).

11. The method of claim 10, wherein the control unit (108) operates the first heater (104a) and the second heater (104b) to heat the first zone (140) and the second zone (142) to different temperatures to form the component (102).

12. The method of claim 9, wherein additional zones are heated to different temperatures.

13. The method of any one of claims 9-12, wherein the one or more heaters (104) are used to form the component (102), and for functional heating of the component (102) after the component (102) is formed.

14. The method of any one of claims 9-13, further comprising controlling, by a control unit (108) in communication with the one or more heaters (104) operation of the one or more heaters, as well as acquiring, by an imaging device (176), images of the component (102) during said generating.

## Patentansprüche

1. System (100) zum Bilden einer Komponente (102) eines Eisschutzsystems einer Einlasshaube (224) einer Gondel (210) eines Luftfahrzeugantriebssystems, wobei das System (100) aufweist:
eine oder mehrere Verbundschichten und eine oder mehrere dielektrische Schichten, die einen oder mehrere Teile (110) der Komponente (102) bilden;
einen oder mehrere Heizeinrichtungen (104), die eingerichtet sind, Wärme zu erzeugen, um die Komponente (102) zu bilden, wobei die Komponente (102) nach einem Bilden den einen oder die mehreren Heizeinrichtungen (104) umfasst;
wobei die eine oder mehreren Heizeinrichtungen (104) eingerichtet sind, die Wärme zu erzeugen, um den einen oder die mehreren Teile (110) und die eine oder mehreren Heizeinrichtungen (104) miteinander zu verbinden, zu konsolidieren, herzustellen oder auszuhärten, um die Komponente (102) zu bilden;
wobei die eine oder mehreren Heizeinrichtungen (104) aufweisen:
eine erste Heizeinrichtung (104a), die eingerichtet ist, eine erste Zone (140) der Komponente (102) zu erwärmen; und
eine zweite Heizeinrichtung (104b), die eingerichtet ist, eine zweite Zone (142) der Komponente (102) zu erwärmen;
wobei sich die erste Heizeinrichtung (104a) und die zweite Heizeinrichtung (104b) innerhalb einer Heizeinrichtungsschicht (105) befinden.

2. System (100) nach Anspruch 1, das ferner eine Steuereinheit (108) in Verbindung mit der einen oder den mehreren Heizeinrichtungen (104) aufweist, wobei die Steuereinheit (108) eingerichtet ist, einen Betrieb der einen oder mehreren Heizeinrichtungen (104) zu steuern.

3. System (100) nach einem der vorhergehenden Ansprüche, wobei die eine oder mehreren Heizeinrichtungen (104) ein oder mehrere elektrische Widerstandsheizeinrichtungen (104) sind.

4. System (100) nach einem der vorhergehenden Ansprüche, wobei sich die Dicke der ersten Zone (140) von der Dicke der zweiten Zone (142) unterscheidet.

5. System nach einem der Ansprüche 1 bis 3, wobei die Dicke der ersten Zone (140) die gleiche wie die Dicke der zweiten Zone (142) ist.

6. System nach Anspruch 1, wobei die Komponente (102) zusätzliche Zonen umfasst, die eingerichtet sind, auf unterschiedliche Temperaturen erwärmt zu werden.

7. System (100) nach einem der vorhergehenden Ansprüche, das ferner eine Bildgebungsvorrichtung (176) aufweist, die eingerichtet ist, Bilder der Komponente (102) zu erfassen, während die Komponente (102) gebildet wird.

8. System nach einem der Ansprüche 1 bis 7, wobei die eine oder mehreren Heizeinrichtungen (104) eingerichtet sind, zum Bilden der Komponente (102) verwendet zu werden und um die Komponente (102) funktionell zu erwärmen, nachdem die Komponente (102) ausgebildet ist.

9. Verfahren zum Bilden einer Komponente (102) eines Eisschutzsystems einer Einlasshaube (224) einer Gondel (210) eines Luftfahrzeugantriebssystems, wobei das Verfahren aufweist:
Anordnen, auf oder innerhalb eines oder mehrerer Teile einer zu bildenden Komponente, einer oder mehrerer Verbundschichten und einer oder mehrerer dielektrischer Schichten und einer oder mehrerer Heizeinrichtungen (104), die eingerichtet sind, Wärme zu erzeugen;
Erzeugen, durch die eine oder mehreren Heizeinrichtungen (104), der Wärme, um den einen oder die mehreren Teile (110) und die eine oder mehreren Heizeinrichtungen (104) miteinander zu verbinden, zu konsolidieren, herzustellen oder auszuhärten, um die Komponente (102) zu bilden,
wobei die Komponente (102) nach einem Bilden die eine oder mehreren Heizeinrichtungen (104) umfasst;
wobei eine erste Heizeinrichtung (104a) eingerichtet ist, eine erste Zone (140) der Komponente (102) zu erwärmen; und
wobei eine zweite Heizeinrichtung (104b) eingerichtet ist, eine zweite Zone (142) der Komponente (102) zu erwärmen;
wobei sich die erste Heizeinrichtung (104a) und die zweite Heizeinrichtung (104b) innerhalb einer Heizeinrichtungsschicht (105) befinden.

10. Verfahren nach Anspruch 9, das eine Steuereinheit (108) in Verbindung mit der einen oder den mehreren Heizeinrichtungen (104) aufweist, wobei die Steuereinheit (108) einen Betrieb der einen oder mehreren Heizeinrichtungen (104) steuert.

11. Verfahren nach Anspruch 10, wobei die Steuereinheit (108) die erste Heizeinrichtung (104a) und die zweite Heizeinrichtung (104b) betreibt, um die erste Zone (140) und die zweite Zone (142) auf unterschiedliche Temperaturen zu erwärmen, um die Komponente (102) zu bilden.

12. Verfahren nach Anspruch 9, wobei zusätzliche Zonen auf unterschiedliche Temperaturen erwärmt werden.

13. Verfahren nach einem der Ansprüche 9 bis 12, wobei die eine oder mehreren Heizeinrichtungen (104) zum Bilden der Komponente (102) und zum funktionellen Erwärmen der Komponente (102) verwendet werden, nachdem die Komponente (102) gebildet ist.

14. Verfahren nach einem der Ansprüche 9 bis 13, das ein Steuern, durch eine Steuereinheit (108) in Verbindung mit der einen oder den mehreren Heizeinrichtungen (104), des Betriebs der einen oder mehreren Heizeinrichtungen, sowie ein Erfassen, durch eine Bildgebungsvorrichtung (176), von Bildern der Komponente (102) während des Erzeugens aufweist.

## Revendications

1. Système (100) destiné à former un composant (102) d'un système de protection contre le givrage d'un capot d'entrée (224) d'une nacelle (210) d'un système de propulsion d'aéronef, le système (100) comprenant :
une ou plusieurs couches composites et une ou plusieurs couches diélectriques formant une ou plusieurs pièces (110) du composant (102) ;
un ou plusieurs éléments chauffants (104) conçus pour générer de la chaleur afin de former le composant (102), le composant (102), une fois formé,
comprenant ledit ou lesdits éléments chauffants (104) ;
dans lequel
ledit ou lesdits éléments chauffants (104) sont conçus pour générer la chaleur afin d'assembler, de consolider, de fabriquer ou de durcir ladite ou
lesdites pièces (110) et ledit ou lesdits éléments chauffants (104) ensemble pour former le composant (102) ;
ledit ou lesdits éléments chauffants (104) comprennent :
un premier élément chauffant (104a) conçu pour chauffer une première zone (140) du composant (102) ; et
un deuxième élément chauffant (104b) conçu pour chauffer une deuxième zone (142) du composant (102) ;
le premier élément chauffant (104a) et le deuxième élément chauffant (104b) se trouvent à l'intérieur d'une couche chauffante (105).

2. Système (100) selon la revendication 1,
comprenant en outre une unité de commande (108) en communication avec ledit ou lesdits éléments chauffants (104), l'unité de commande (108) étant conçue pour commander le fonctionnement dudit ou desdits éléments chauffants (104).

3. Système (100) selon l'une des revendications précédentes,
dans lequel ledit ou lesdits éléments chauffants (104) sont un ou plusieurs éléments chauffants à résistance électrique (104).

4. Système (100) selon l'une des revendications précédentes,
dans lequel l'épaisseur de la première zone (140) est différente de l'épaisseur de la deuxième zone (142).

5. Système selon l'une des revendications 1 à 3,
dans lequel l'épaisseur de la première zone (140) est identique à l'épaisseur de la deuxième zone (142).

6. Système selon la revendication 1,
dans lequel le composant (102) comprend des zones supplémentaires conçues pour être chauffées à des températures différentes.

7. Système (100) selon l'une des revendications précédentes,
comprenant en outre un dispositif d'imagerie (176) conçu pour acquérir des images du composant (102) au fur et à mesure que le composant (102) est formé.

8. Système selon l'une des revendications 1 à 7,
dans lequel ledit ou lesdits éléments chauffants (104) sont conçus pour être utilisés afin de former le composant (102) et de chauffer fonctionnellement le composant (102), une fois que le composant est formé.

9. Procédé de formation d'un composant (102) d'un système de protection contre le givrage d'un capot d'entrée (224) d'une nacelle (210) d'un système de propulsion d'aéronef, le procédé consistant à :
placer, sur ou à l'intérieur d'une ou plusieurs pièces d'un composant à former, une ou plusieurs couches composites et une ou plusieurs couches diélectriques, ainsi qu'un ou plusieurs éléments chauffants (104) conçus pour générer de la chaleur ;
générer, à l'aide dudit ou desdits éléments chauffants (104), la chaleur nécessaire pour assembler, consolider, fabriquer ou durcir ladite ou lesdites pièces (110) et ledit ou lesdits éléments chauffants (104) ensemble afin de former le composant (102),
dans lequel
le composant (102), une fois formé, comprend ledit ou lesdits éléments chauffants (104) ;
un premier élément chauffant (104a) est conçu pour chauffer une première zone (140) du composant (102) ; et
un deuxième élément chauffant (104b) est conçu pour chauffer une deuxième zone (142) du composant (102) ;
le premier élément chauffant (104a) et le deuxième élément chauffant (104b) se trouvent à l'intérieur d'une couche chauffante (105).

10. Procédé selon la revendication 9,
comprenant une unité de commande (108) en communication avec ledit ou lesdits éléments chauffants (104), l'unité de commande (108) commandant le fonctionnement dudit ou desdits éléments chauffants (104).

11. Procédé selon la revendication 10,
dans lequel l'unité de commande (108) fait fonctionner le premier élément chauffant (104a) et le deuxième élément chauffant (104b) pour chauffer la première zone (140) et la deuxième zone (142) à des températures différentes afin de former le composant (102).

12. Procédé selon la revendication 9,
dans lequel des zones supplémentaires sont chauffées à des températures différentes.

13. Procédé selon l'une des revendications 9 à 12,
dans lequel ledit ou lesdits éléments chauffants (104) sont utilisés pour former le composant (102) et pour le chauffage fonctionnel du composant (102), une fois que le composant (102) est formé.

14. Procédé selon l'une des revendications 9 à 13,
consistant en outre à commander, par une unité de commande (108) en communication avec ledit ou lesdits éléments chauffants (104), le fonctionnement dudit ou desdits éléments chauffants, ainsi qu'à acquérir, par un dispositif d'imagerie (176), des images du composant (102) pendant ladite génération.
